# FASCICULE DE BREVET EUROPEEN

(11) **EP 3 107 682 B1**
(45) Date de publication et mention de la délivrance du brevet: **11.04.2018**
(21) Numéro de dépôt: 15713200.2
(22) Date de dépôt: 19.02.2015
(51) Int. Cl.: B23K 31/12, G03B 42/04

(54) **PROCEDE POUR CONTROLER UNE SOUDURE PAR RADIOGRAPHIE**
VERFAHREN ZUR ÜBERPRÜFUNG EINER SCHWEISSUNG MITTELS RÖNTGENOGRAPHIE
X-RAY WELDMENT CONTROL METHOD

(30) Priorité: 21.02.2014 FR 1451391
(43) Date de publication de la demande: 28.12.2016
(73) Titulaire: Beweis, 13400 Aubagne (FR)
(72) Inventeur: CATONIO, Jacky, F-83170 Tourves (FR); CROZET, Sylvain, F-13600 La Ciotat (FR); VALANSI, Jérémy, F-13330 Pelissanne (FR)
(74) Mandataire: Roman, Alexis
(86) Numéro de dépôt international: PCT/FR2015/050400
(87) Numéro de publication internationale: WO 2015/124870

(56) Documents cités:
- EP-A1- 2 591 447

## Description

### Domaine technique de l'invention.

L'invention a pour objet un procédé permettant de contrôler un cliché radiographique d'une soudure de tuyauterie.

Elle concerne le domaine technique des techniques permettant d'associer de manière certaine, sans possibilité de falsification, un cliché radiographique à une soudure de tuyauterie, de plaque, ou de tout autre objet.

### État de la technique.

Le repérage des soudures à radiographier se fait généralement par un opérateur radio au moment du tir de la radio (i.e. au moment de la prise du cliché radiographique). C'est ce même opérateur qui installe des numéros ou lettres en plomb permettant d'identifier la soudure à radiographier. Il est donc possible qu'un opérateur mal intentionné puisse modifier l'identification de la soudure. Par exemple, l'opérateur peut affecter le numéro d'une soudure qu'il sait non conforme au cliché radiographique d'une soudure conforme.

Pour pallier cela, le document brevet EP2591447 (BEWEIS) décrit un dispositif permettant de relier une soudure devant être radiographiée au cliché radiographique, sans possibilité de falsification. Ce dispositif consiste en une plaque-support intégrant un identifiant alpha numérique opaque aux rayons X et gamma. Une résine opaque est coulée dans la coque de la plaque support, afin que l'identifiant soit invisible à l'oeil nu. Ce dispositif comprend en outre un autocollant détachable sur lequel est inscrit le même identifiant alpha numérique.

La plaque-support est d'abord fixée sur la tuyauterie, au niveau de la soudure à contrôler, par une tierce personne autre que l'opérateur radio. Cette tierce personne aura également pris soin de détacher l'autocollant pour le coller à côté d'un identifiant de la soudure, par exemple dans une liste d'identifiants de soudures auxquels sont associés des identifiants alpha numérique.

L'opérateur radio réalise le tir radio de la soudure sur laquelle est agencée la plaque-support. L'identifiant apparaît sur le cliché radiographique. Ce n'est donc qu'au moment où l'opérateur radio développe le cliché radiographique qu'il connaît l'identifiant inscrit dans la plaque-support.

Le lien entre la soudure et le cliché radiographique peut alors être fait en lisant le numéro de l'identifiant sur le cliché et en le comparant à l'identifiant inscrit sur l'autocollant collé dans la liste.

En pratique, une installation comprend un grand nombre de soudures à contrôler. De fait, la liste d'identifiants de soudures auxquels sont associés les identifiants alpha numérique comprend un grand nombre de références. L'association, à posteriori, d'un cliché radiographique avec l'identifiant d'une soudure est donc généralement fastidieux et coûteux en temps.

L'invention vise à remédier à cet état des choses. En particulier, un objectif de l'invention est de simplifier l'association d'un cliché radiographique avec un identifiant de soudure, tout en continuant à se prémunir de toute falsification.

Un autre objectif de l'invention est de contrôler plus rapidement un cliché radiographique d'une soudure.

Un objectif subsidiaire de l'invention est d'automatiser autant que possible le contrôle d'un cliché radiographique d'une soudure.

### Divulgation de l'invention.

La solution proposée par l'invention est un procédé pour contrôler une soudure par radiographie. Ce procédé est remarquable en ce qu'il comprend les étapes suivantes :
- associer un identifiant unique à la soudure devant être contrôlée,
- inscrire sur une étiquette un identifiant alpha numérique et l'identifiant unique de la soudure, au moins l'identifiant alpha numérique étant inscrit de manière visible à l'oeil nu,
- intégrer dans une plaque-support le même identifiant alpha numérique que celui inscrit sur l'étiquette, lequel identifiant est invisible à l'oeil nu et composé d'éléments opaques aux rayons X et gamma,
- installer la plaque-support au niveau de la soudure et prendre un cliché radiographique de l'ensemble soudure/plaque-support,
- fixer l'étiquette sur le cliché radiographique pris,
- développer le cliché radiographique pris, de manière à ce que l'identifiant alpha numérique devienne visible à l'oeil nu sur ledit cliché,
- vérifier la correspondance entre l'identifiant alpha numérique visible à l'oeil nu sur le cliché radiographique développé et l'identifiant alpha numérique inscrit sur l'étiquette.

Grâce à ce procédé, il est maintenant possible de vérifier facilement et rapidement l'association d'un cliché radiographique avec un identifiant de soudure. En effet, en apposant l'étiquette sur le cliché radiographique, la personne qui détient le cliché radiographique développé peut instantanément vérifier la correspondance entre l'identifiant alpha numérique qui apparait sur ce cliché et l'identifiant alpha numérique inscrit sur l'étiquette. Ce procédé assure en outre une sécurisation optimale, puisque ni l'étiquette, ni la plaque-support ne peuvent être falsifiés.

D'autres caractéristiques avantageuses du procédé objet de l'invention sont listées ci-dessous. Chacune de ces caractéristiques peut être considérée seule ou en combinaison avec les caractéristiques remarquables définies ci-dessus, lesquelles caractéristiques remarquables n'étant pas nécessairement indispensables en tant que telles à la résolution des problèmes techniques que les caractéristiques ci-dessous se proposent de résoudre :
- On intègre avantageusement dans la plaque-support une première puce RFID et l'identifiant alpha numérique opaque aux rayons X et gamma ; et on incrémente la mémoire de cette première puce RFID avec : l'identifiant alpha numérique, et l'identifiant unique de la soudure.
- On peut lire la première puce RFID et éditer une première étiquette sur laquelle sont inscrits au moins : l'identifiant alpha numérique et l'identifiant unique de la soudure, laquelle inscription est réalisée en intégrant de manière cryptée ces identifiants dans un code-barres ou dans la mémoire d'une seconde puce RFID dont est pourvue ladite première étiquette.
- Après avoir installé la plaque-support au niveau de la soudure et prit un cliché radiographique de l'ensemble soudure/plaque-support, on colle la première étiquette sur une enveloppe scellée dans laquelle est inséré le cliché radiographique.
- Préférentiellement, on lit le code barre ou la seconde puce RFID disposé sur la première étiquette collée sur l'enveloppe, et on incrémente la mémoire d'une troisième puce RFID avec : l'identifiant alpha numérique, et l'identifiant unique de la soudure ; on édite ensuite une seconde étiquette dans laquelle est intégrée la troisième puce RFID, et on inscrit sur cette seconde étiquette, de manière visible à l'oeil nu, au moins l'identifiant alpha numérique et l'identifiant unique de la soudure ; après avoir sorti le cliché radiographique de l'enveloppe, on colle la seconde étiquette sur ledit cliché ; puis on développe le cliché radiographique de manière à ce que l'identifiant alpha numérique soit visible à l'oeil nu sur ledit cliché ; on peut alors vérifier la correspondance entre l'identifiant alpha numérique qui est visible à l'oeil nu sur le cliché développé et l'identifiant alpha numérique inscrit sur la seconde étiquette.
- En cas de correspondance entre l'identifiant alpha numérique visible à l'oeil nu sur le cliché radiographique développé et l'identifiant alpha numérique inscrit sur la seconde étiquette : on lit la troisième puce RFID, et on génère un rapport prérempli dans lequel sont consignées les informations contenues dans la mémoire de la troisième puce RFID.
- On installe avantageusement la plaque-support au niveau de la soudure, en l'attachant sur la tuyauterie au moyen d'un collier pourvu d'un verrou sécurisé empêchant le détachement dudit collier.
- On peut également installer la première étiquette dans un pochon, et accrocher ce pochon sur le collier auquel est attachée la plaque-support.
- la soudure devant être contrôlée peut être géo-localisée en intégrant dans la plaque-support une information de géo-localisation associée à la soudure, et/ou en associant à la soudure une information de géo-localisation au moment de sa réalisation et/ou en lisant la première puce RFID au moyen d'un lecteur de puce RFID intégrant un module GPS capable de relever des coordonnées GPS, et en enregistrant dans une mémoire de ce lecteur, les coordonnées GPS relevées au moment de la lecture de ladite la première puce.

Un autre aspect de l'invention concerne un système pour contrôler une soudure par radiographie. Ce système est remarquable en ce qu'il comprend :
- une étiquette sur laquelle est inscrit de manière visible à l'oeil nu : un identifiant unique associé à la soudure à contrôler et un identifiant alpha numérique,
- une plaque-support intégrant le même identifiant alpha numérique que celui inscrit sur l'étiquette, lequel identifiant est invisible à l'oeil nu et composé d'éléments opaques aux rayons X et gamma,
- un appareil pour prendre un cliché radiographique de l'ensemble soudure/plaque-support,
- un moyen de fixation de l'étiquette sur le cliché radiographique pris,
- un moyen pour développer le cliché radiographique pris, de manière à ce que l'identifiant alpha numérique devienne visible à l'oeil nu sur ledit cliché,
- un moyen pour vérifier la correspondance entre l'identifiant alpha numérique visible à l'oeil nu sur le cliché radiographique développé et l'identifiant alpha numérique inscrit sur l'étiquette.

D'autres caractéristiques avantageuses du système objet de l'invention sont listées ci-dessous. Chacune de ces caractéristiques peut être considérée seule ou en combinaison avec les caractéristiques remarquables définies ci-dessus, lesquelles caractéristiques remarquables n'étant pas nécessairement indispensables en tant que telles à la résolution des problèmes techniques que les caractéristiques ci-dessous se proposent de résoudre :
- la plaque-support est préférentiellement attachée sur une tuyauterie, au niveau de la soudure, au moyen d'un collier, ladite plaque-support étant reliée audit collier au moyen d'un lien configuré pour autoriser une rotation de ladite plaque-support autour de ladite tuyauterie.
- la plaque-support peut être formée d'une coque présentant un logement dans lequel sont logés les éléments constitutifs de l'identifiant alpha numérique, ce logement étant obturé par une plaque OPAQUE dans laquelle est intégrée une puce RFID.

### Description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure 1 est une vue isométrique d'une plaque-support conforme à l'invention, montrant ses différents éléments constitutifs,
- la figure 2 est une vue en coupe schématisant l'installation d'une plaque support conforme à l'invention, autour d'une tuyauterie,
- la figure 3 est une vue schématique d'une première étiquette selon l'invention,
- la figure 4 illustre l'installation d'une plaque support conforme à l'invention et d'une pochette contenant plusieurs premières étiquettes, autour d'une tuyauterie, au niveau d'une soudure,
- la figure 5 schématise une enveloppe contenant un cliché radiographique, et sur laquelle est collée une première étiquette,
- la figure 6 illustre des étapes permettant d'éditer une seconde étiquette destinée à être collée sur un cliché radiographique,
- la figure 7 illustre des étapes permettant de générer un rapport prérempli.

### Mondes préférés de réalisation de l'invention.

La description qui suit fait référence au contrôle d'une soudure de tuyauterie. L'invention est toutefois applicable au contrôle de tout autre type de soudure, par exemple une soudure de plaque ou de tout autre objet.

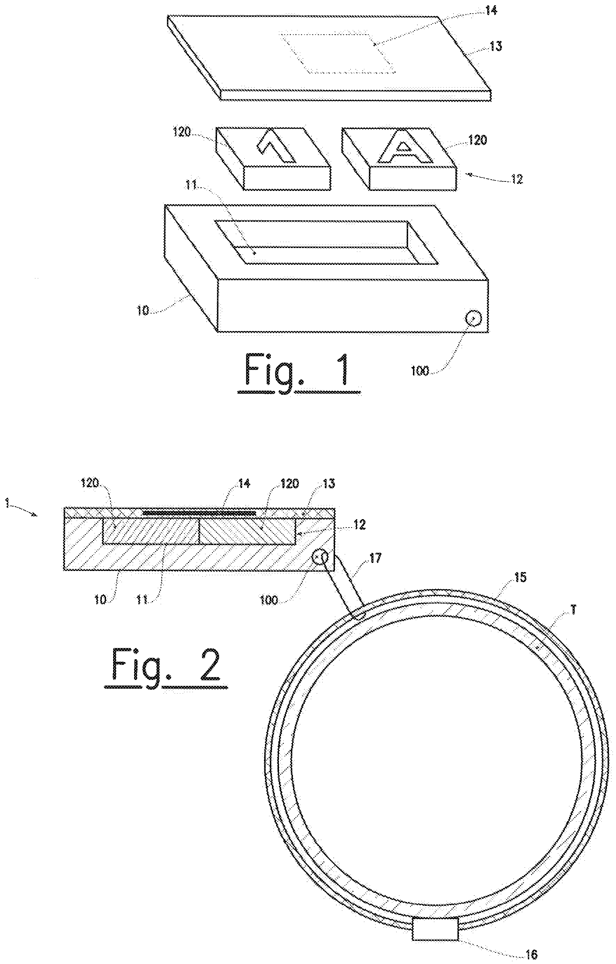

La figure 1 illustre différents éléments constitutifs d'une plaque-support 1 conforme à l'invention. Elle comprend une coque 10 rigide ou souple, par exemple réalisée par moulage d'un plastique opaque. Cette coque est par exemple de forme rectangulaire, d'une longueur d'environ 5 cm, d'une largeur d'environ 4 cm, et d'une épaisseur d'environ 3 mm.

La coque 10 présente un logement 11 dans lequel sont logés les éléments 120 constitutifs d'un identifiant alpha numérique 12. Par identifiant alpha numérique, on entend une suite de lettres et/ou de chiffres et/ou de symboles. Dans l'exemple illustré sur les figures annexées, cet identifiant 12 est constitué d'un chiffre « 1 » et d'une lettre « A ». L'utilisation de plusieurs chiffres et/ou lettres et/ou symboles peut bien évidemment être envisagée.

L'identifiant 12 est unique et ses éléments constitutifs 120 sont réalisés dans un matériau opaque au rayonnement de la source radio, et plus particulièrement aux rayons X et gamma. Les éléments 120 sont préférentiellement réalisés en plomb ou en laiton.

Après avoir disposé les éléments 120 dans le logement 11, et comme cela apparait sur les figures 1 et 2, ledit logement est obturé par une plaque 13 dans laquelle est intégrée une puce RFID 14. Cette dernière se présente par exemple sous la forme d'un circuit électronique collé ou noyé dans la plaque 13, et comprenant une antenne associée à une puce électronique lui permettant de recevoir et de répondre aux requêtes radio émises depuis un lecteur émetteur-récepteur.

La plaque 13 est opaque, par exemple réalisée en plastique rigide ou souple. Sa longueur et sa largeur correspondent à celles de la coque 1. Son épaisseur est toutefois moindre, par exemple d'environ 2 mm. La plaque 13 peut être collée ou soudée sur la coque 1. Sa fixation est telle que son démontage est impossible sauf à détruire la coque 1 et/ou la puce RFID 14. Un résultat similaire est obtenu en disposant la puce RFID 14 dans le logement 11, et en coulant dans ce dernier une résine opaque. Une fois que la plaque-support 1 est fabriquée, l'identifiant 12 est invisible à l'oeil nu et il n'est plus possible de la démonter pour falsifier les éléments 120.

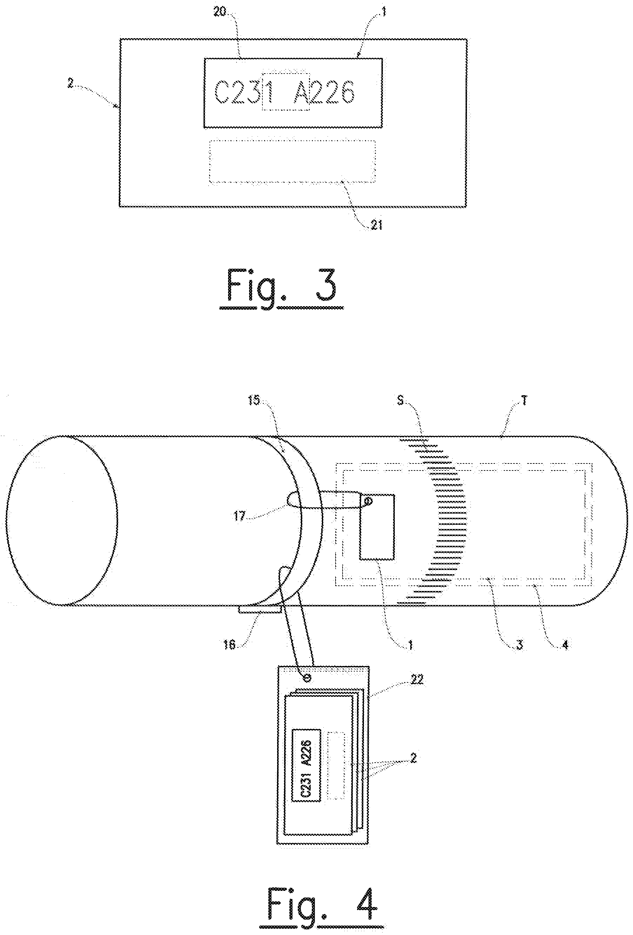

En se rapportant aux figures 2 et 4, la plaque-support 1 est attachée sur la tuyauterie T, au niveau de la soudure S à contrôler. Cette opération est réalisée par un opérateur autre que l'opérateur radio. On utilise un collier 15, en plastique ou en acier, que l'on attache autour de la tuyauterie T. Le collier 15 est muni d'un verrou sécurisé 16 empêchant son détachement de la tuyauterie T.

La plaque-support 1 est reliée au collier 15 au moyen d'un lien 17 en forme de boucle. En pratique, la coque 10 de la plaque-support 1 comprend un perçage 100 permettant l'attache du lien 17. La boucle du lien 17 passe autour du collier 15 de sorte que la plaque-support 1 peut librement tourner autour de la tuyauterie. L'opérateur radio a ainsi la possibilité de déplacer la plaque-support 1 pour la positionner à n'importe quel niveau de la soudure S, et plus particulièrement selon la position envisagée pour le tir radio.

En pratique, l'opérateur radio positionne la plaque-support 1 juste à côté de la soudure S, préférentiellement de manière adjacente, pour que ladite plaque-support ne cache pas l'image qui sera prise de la soudure. Si plusieurs clichés de la soudure S doivent être pris selon différents angles, l'opérateur radio peut aisément modifier la position de la plaque-support 1 en conséquent.

Ce type de plaque support 1 est utilisé pour contrôler des clichés radiographiques de soudures de tuyauterie. L'installation à contrôler est typiquement une usine ou une centrale nucléaire comprenant plusieurs dizaines de mètres linéaires de tuyauterie sur lesquelles sont réalisées plusieurs centaines de soudures. Chaque cliché radiographique est destiné à mettre en évidence la structure interne de la soudure S. Sur ce cliché, l'image de l'identifiant 12 intégré dans la plaque-support 1 sera située à côté de l'image de la structure interne de la soudure S.

Chaque soudure S à contrôler est associée à un identifiant unique 20, préférentiellement constitué d'une suite de lettres et/ou de chiffres et/ou de symboles. A titre d'exemple, et pour illustrer la présente invention, l'identifiant « C231A226 » est associé à la soudure S à contrôler. Selon un mode préféré de réalisation, l'identifiant alpha numérique 12 reprend certaines lettres et/ou chiffres et/ou symboles de l'identifiant 20 de la soudure. Exemple : C231A226 → 1A.

Pour faciliter le repérage d'une soudure S dans l'installation, chaque soudure est avantageusement associée à une information de géo-localisation au moment de sa réalisation. Par exemple, dès que le soudeur a réalisé la soudure, il peut enregistrer sa position, et donc celle de la soudure, au moyen d'une tablette tactile, laquelle tablette intègre un programme de géo-localisation permettant par exemple d'associer des coordonnées GPS à l'identifiant de la soudure S. On peut également lire la première puce RFID 14 au moyen d'un lecteur de puce RFID intégrant un module GPS capable de relever des coordonnées GPS. Au moment de la lecture de la première puce 14, les coordonnées GPS relevées sont enregistrées dans une mémoire de ce lecteur. Il est alors possible d'associer ces coordonnées GPS au numéro unique de la puce 14 et incidemment à l'identifiant 20 de la soudure S.

Lors de la fabrication de la plaque-support 1, on incrémente la mémoire de première puce RFID 14 avec l'identifiant alpha numérique 12, et avec l'identifiant unique 20 de la soudure S. Cette incrémentation est réalisée automatiquement au moyen d'un logiciel du type connu de l'Homme du métier. On peut également intégrer dans la plaque-support 1, et plus particulièrement dans la mémoire de première puce RFID 14, une information de géo-localisation associée à la soudure S. Il peut par exemple s'agir des coordonnées GPS précitées. De cette façon, en scannant la première puce RFID, un opérateur peut contrôler qu'il installe la plaque-support 1 au niveau de la soudure S correspondante.

Avant d'installer la plaque-support 1, la première puce RFID 14 est lue - ou scannée - au moyen d'un lecteur émetteur-récepteur. Ce type d'appareil permet d'échanger des informations avec une puce RFID et est du type connu de l'homme du métier. Ce lecteur est couplé à une unité de gestion, par exemple du type ordinateur, intégrant un processeur et une mémoire dans laquelle est enregistré un programme informatique dont les instructions, lorsqu'elles sont exécutées par ledit processeur, permettent d'éditer automatiquement au moins une première étiquette 2 par l'intermédiaire d'une imprimante.

La première étiquette 2, schématisée sur la figure 3, est par exemple une étiquette autocollante. Elle comprend entre autre l'inscription de l'identifiant 20 « C231A226 » de la soudure S. Cet identifiant 20 peut être visible à l'oeil nu et/ou être invisible en étant inscrit de manière cryptée dans un code-barres (dont QR-Code) ou dans la mémoire d'une seconde puce RFID 21 dont est pourvue la première étiquette 2. L'identifiant 12 alpha numérique « 1A » peut également être inscrit de manière cryptée dans un code-barres ou dans la mémoire de la seconde puce RFID 21. Cette dernière peut en outre comprendre d'autres inscriptions telles que : nom de l'installation, nom du soudeur, localisation de la soudure, matériau de la soudure, etc.

Pour un contrôle optimal de la soudure S, il est nécessaire de prendre plusieurs clichés radiographiques sous plusieurs angles. En pratique, on prévoit d'imprimer plusieurs premières étiquettes 2 identiques de sorte que pour une soudure S, l'opérateur radio puisse associer une de ces étiquettes à chaque cliché radiographique pris. Comme cela apparait sur la figure 4, il apparait avantageux d'installer ces premières étiquettes 2 dans un pochon 22, et d'accrocher ce pochon sur le collier 15 auquel est attachée la plaque-support 1.

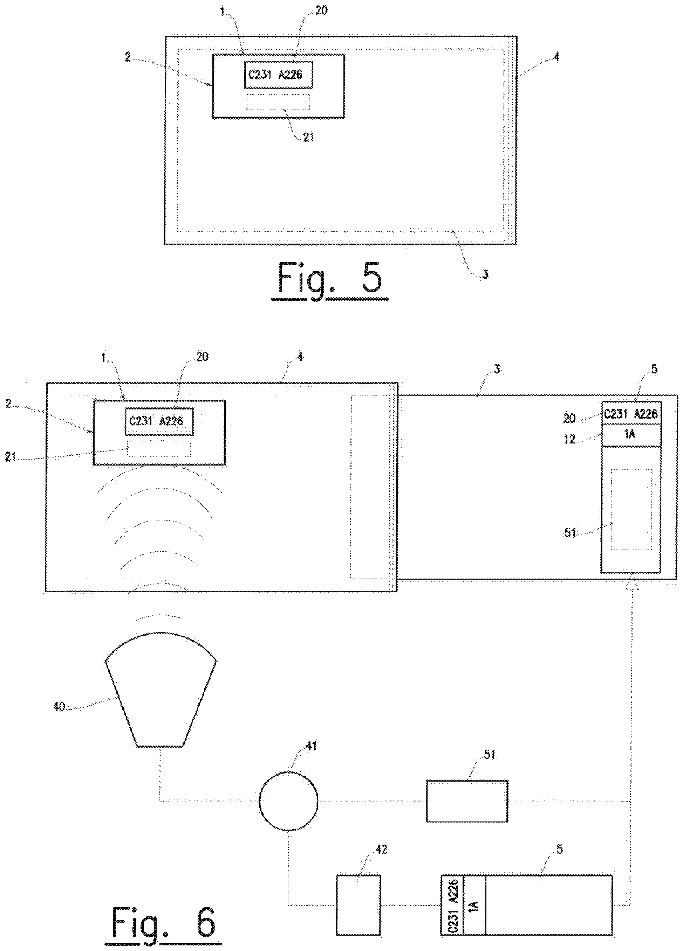

L'opérateur radio installe la plaque-support 1 au niveau de la soudure S (selon l'angle choisi) et prend un cliché radiographique de l'ensemble soudure/plaque-support au moyen d'un appareil radiographique classique. Comme illustré sur les figures 4 et 5, le cliché radiographique 3 est initialement inséré dans une enveloppe 4 permettant de le protéger de la lumière. Et la prise radio s'effectue en maintenant le cliché 3 inséré dans son enveloppe 4 de protection. Ce n'est qu'au moment de son développement que le cliché 3 sera sorti de l'enveloppe 4.

En se rapportant à la figure 5, dès que le cliché radiographique 3 est pris, et avant tout développement, l'opérateur radio fixe une première étiquette 2 sur l'enveloppe 4 scellée, par exemple au moyen de colle préalablement disposée sur une face de ladite étiquette, ou par tout autre moyen de fixation similaire. L'opérateur radio réitère cette opération pour chaque cliché pris de la soudure S, et pour chaque autre soudure de l'installation.

Selon l'exemple illustré par les figures annexées et plus particulièrement par la figure 6, à l'issue de son inspection, l'opérateur radio dispose de plusieurs enveloppes 4 contenant chacune un cliché radiographique 3. L'opérateur radio, ou un autre opérateur lit le code barre ou la seconde puce RFID 21 disposé sur la première étiquette 2. Cette lecture est réalisée au moyen d'un lecteur 40 adapté (type lecteur de code-barres, scanneur de puce RFID, ...) couplé à une unité de gestion électronique 41. Cette dernière se présente par exemple sous la forme d'un ordinateur, intégrant un processeur et une mémoire dans laquelle est enregistré un programme informatique dont les instructions, lorsqu'elles sont exécutées par ledit processeur, permettent :
- d'extraire tout ou partie des données contenues dans la mémoire de la seconde puce RFID 21, et notamment l'identifiant alpha numérique 12 et l'identifiant unique 20 de la soudure S,
- et d'incrémenter la mémoire d'une troisième puce RFID 51 avec ces identifiants 12 et 20.

L'unité de gestion électronique 41 peut également piloter une imprimante 42 pour éditer automatiquement une seconde étiquette 5 pouvant directement intégrer la troisième puce RFID 51. Cette dernière peut également être intégrée à l'étiquette 5 postérieurement à son édition, par exemple par collage. Au moins l'identifiant alpha numérique 12 est inscrit de manière visible à l'oeil nu sur la seconde étiquette 5. L'identifiant unique 20 de la soudure S et/ou d'autres informations peuvent également être inscrits de manière visible sur l'étiquette 5 et/ou de manière invisible dans un code-barres ou dans la mémoire de la troisième puce RFID 51.

Après avoir sorti le cliché radiographique 3 de l'enveloppe 4, la seconde étiquette 5, dans laquelle est intégrée la troisième puce RFID 51, est fixée sur ledit cliché, par exemple au moyen de colle préalablement disposée sur une face de ladite étiquette, ou par tout autre moyen de fixation similaire.

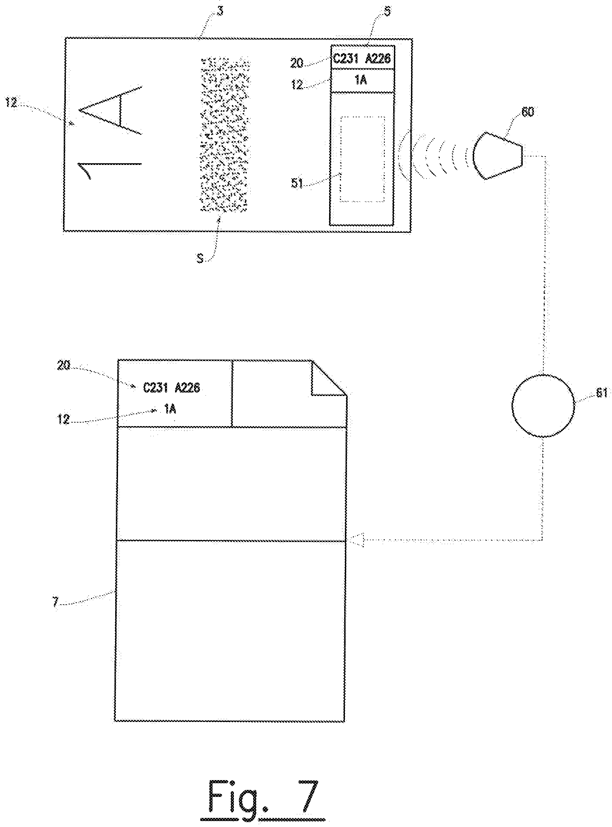

Comme illustré sur la figure 7, le cliché radiographique 3 est ensuite développé pour révéler l'image latente de la structure interne de la soudure S et l'image latente de l'identifiant alpha numérique 12 qui devient ainsi visible à l'oeil nu. Ce développement est réalisé automatiquement ou manuellement au moyen d'une développeuse classique. On peut par exemple utiliser une développeuse commercialisée par la société 3M® sous la marque DryView®.

Un opérateur vérifie alors la correspondance entre l'identifiant alpha numérique 12 visible à l'oeil nu sur le cliché radiographique 3 développé et l'identifiant alpha numérique 12 inscrit sur la seconde étiquette 5. Cette vérification est réalisée manuellement à l'oeil nu, ou automatiquement au moyen d'un scanner. S'il n'y a pas de correspondance entre ces deux identifiants alphanumériques, une falsification doit être signalée par tout moyen approprié. En cas de correspondance, l'opérateur peut établir un rapport.

Plus particulièrement, en examinant le cliché, un opérateur qualifié interprète l'image de la structure interne de la soudure S en relevant les indications présentes et en les évaluant selon les normes en vigueur et/ou selon des spécifications particulières. L'opérateur averti pourra par exemple déceler la présence de défauts tels que des microfissures ou au contraire constater l'intégrité de la soudure S. Cette évaluation est ensuite retranscrite dans le rapport de l'opérateur.

Selon une caractéristique avantageuse de l'invention illustrée sur la figure 7, l'établissement de ce rapport est automatisé au moins en partie. En cas de correspondance entre l'identifiant alpha numérique 12 visible à l'oeil nu sur le cliché 3 et l'identifiant alpha numérique 12 inscrit sur la seconde étiquette 5, on lit la troisième puce RFID 51 au moyen d'un lecteur 60 du type décrit précédemment. Ce lecteur 60 est couplé à une unité de gestion électronique 61 qui se présente par exemple sous la forme d'un ordinateur, intégrant un processeur et une mémoire dans laquelle est enregistré un programme informatique dont les instructions, lorsqu'elles sont exécutées par ledit processeur, permettent de générer un rapport prérempli 7 dans lequel sont consignées les informations contenues dans la mémoire de la troisième puce RFID 51. Ce rapport 7 peut être généré sous forme papier au moyen d'une imprimante pilotée par l'unité 61, ou sous format électronique.

Sur ce rapport 7, peuvent être consignés automatiquement les informations contenues dans la mémoire de la troisième puce RFID 51 et notamment : l'identifiant 20 de la soudure S, l'identifiant alphanumérique 12, la date de prise du cliché radiographique, l'information de géo-localisation de la soudure, le nom de l'opérateur ayant interprété le cliché radiographique 3, le nom de l'installation, le nom du soudeur, le matériau de la soudure, etc. L'opérateur peut ensuite rentrer manuellement des observations concernant la structure interne de la soudure telles que : absence ou présence de défauts, localisation de ces défauts, mesures préconisées, etc.

L'agencement des différents éléments et/ou moyens et/ou étapes de l'invention, dans les modes de réalisation décrits ci-dessus, ne doit pas être compris comme exigeant un tel agencement dans toutes les implémentations. En tout état de cause, on comprendra que diverses modifications peuvent être apportées à ces éléments et/ou moyens et/ou étapes, sans s'écarter de l'esprit et de la portée de l'invention. En particulier :
- la plaque-support 1 peut être utilisée indépendamment des différentes étiquettes et/ou des puces RFID décrites précédemment, et pour contrôler d'autres objets qu'une soudure de tuyauterie,
- l'opérateur radio peut directement coller la première étiquette 2 sur le cliché radiographique 3 et non pas sur l'enveloppe 4.

## Revendications

1. Procédé pour contrôler un une soudure (S) par radiographie, lequel procédé comprend les étapes suivantes :
- associer un identifiant unique (20) à la soudure (S) devant être contrôlée,
- inscrire sur une étiquette (5) un identifiant alpha numérique (12) et l'identifiant unique (20) de la soudure (S), au moins l'identifiant alpha numérique (12) étant inscrit de manière visible à l'oeil nu,
- intégrer dans une plaque-support (1) le même identifiant alpha numérique (12) que celui inscrit sur l'étiquette (5), lequel identifiant est invisible à l'oeil nu et composé d'éléments (120) opaques aux rayons X et gamma,
- installer la plaque-support (1) au niveau de la soudure (S) et prendre un clichés radiographique (3) de l'ensemble soudure/plaque-support,
- fixer l'étiquette (5) sur le cliché radiographique (3) pris,
- développer le cliché radiographique (3) pris, de manière à ce que l'identifiant alpha numérique (12) devienne visible à l'oeil nu sur ledit cliché,
- vérifier la correspondance entre l'identifiant alpha numérique (12) visible à l'oeil nu sur le cliché radiographique (3) développé et l'identifiant alpha numérique (12) inscrit sur l'étiquette (5).

2. Procédé selon la revendication 1, comprenant les étapes suivante
- intégrer dans la plaque-support (1) : une première puce RAID (14) et l'identifiant alpha numérique (12) opaque aux rayons X et gamma,
- incrémenter la mémoire de cette première puce RFID (14) avec :
∘ l'identifiant alpha numérique (12),
∘ l'identifiant unique (20) de la soudure.

3. Procédé selon la revendication 2, comprenant les étapes consistant à lire la première puce RFID (14) et éditer une première étiquette (2) sur laquelle sont inscrits au moins : l'identifiant alpha numérique (12) et l'identifiant unique (20) de la soudure (S), laquelle inscription est réalisée en intégrant de manière cryptée ces identifiants dans un code-barres ou dans la mémoire d'une seconde puce RFID (21) dont est pourvue ladite première étiquette.

4. Procédé selon la revendication 3, comprenant les étapes consistant à :
- installer la plaque-support (1) au niveau de la soudure (S) et prendre un cliché radiographique (3) de l'ensemble soudure/plaque-support,
- coller la première étiquette (2) sur une enveloppe (4) dans laquelle est inséré le cliché radiographique (3).

5. Procédé selon la revendication 4, comprenant les étapes consistant à :
- lire le code barre ou la seconde puce RFID (21) disposé sur la première étiquette (2) collée sur l'enveloppe (4), et incrémenter la mémoire d'une troisième puce RFID (51) avec :
∘ l'identifiant alpha numérique (12),
∘ l'identifiant unique (20) de la soudure (S),
- éditer une seconde étiquette (5) dans laquelle est intégrée la troisième puce RFID (51), et inscrire sur cette seconde étiquette, de manière visible à l'oeil nu, au moins l'identifiant alpha numérique (12) et l'identifiant unique (20) de la soudure (S),
- sortir le cliché radiographique (3) de l'enveloppe (4) et coller la seconde étiquette (5) sur ledit cliché,
- développer le cliché radiographique (3) de manière à ce que l'identifiant alpha numérique (12) soit visible à l'oeil nu sur ledit cliché,
- vérifier la correspondance entre l'identifiant alpha numérique (12) visible à l'oeil nu sur le cliché radiographique (3) développé et l'identifiant alpha numérique (12) inscrit sur la seconde étiquette (5).

6. Procédé selon la revendication 5, dans lequel en cas de correspondance entre l'identifiant alpha numérique (12) visible à l'oeil nu sur le cliché radiographique (3) développé et l'identifiant alpha numérique (12) inscrit sur la seconde étiquette (5) :
∘ on lit la troisième puce RFID (51),
∘ et on génère un rapport (7) prérempli dans lequel sont consignées les informations contenues dans la mémoire de la troisième puce RFID (51).

7. Procédé selon l'une des revendications précédentes, dans lequel on installe la plaque-support (1) au niveau de la soudure (S), en l'attachant sur la tuyauterie (T) au moyen d'un collier (16) pourvu d'un verrou sécurisé (16) empêchant le détachement dudit collier.

8. Procédé selon la revendication 7 prise en combinaison avec la revendication 3, comprenant une étape consistant à installer la première étiquette (2) dans un pochon (22), et à accrocher ce pochon (22) sur le collier (15) auquel est attachée la plaque-support (1).

9. Procédé selon l'une des revendications 2 à 8, comprenant une étape consistant à géo-localiser la soudure (S) devant être contrôlée, laquelle étape de géo-localisation est réalisée en :
- intégrant dans la plaque-support (1) une information de géo-localisation associée à la soudure (S),
- et/ou en associant à la soudure (S) une information de géo-localisation au moment de sa réalisation
- et/ou en lisant la première puce RFID (14) au moyen d'un lecteur de puce RFID intégrant un module GPS capable de relever des coordonnées GPS, et en enregistrant dans une mémoire de ce lecteur, les coordonnées GPS relevées au moment de la lecture de ladite la première puce.

10. Système pour contrôler une soudure (S) par radiographie, lequel système comprend :
- une étiquette (5) sur laquelle est inscrit un identifiant unique (20) associé à la soudure (S) à contrôler et un identifiant alpha numérique (12), au moins l'identifiant alpha numérique (12) étant inscrit de manière visible à l'oeil nu,
- une plaque-support (1) intégrant le même identifiant alpha numérique (12) que celui inscrit sur l'étiquette, lequel identifiant est invisible à l'oeil nu et composé d'éléments (120) opaques aux rayons X et gamma,
- un appareil radiographique pour prendre un cliché radiographique (3) de l'ensemble soudure/plaque-support,
- un moyen de fixation de l'étiquette (5) sur le cliché radiographique (3) pris,
- un moyen pour développer le cliché radiographique (3) pris, de manière à ce que l'identifiant alpha numérique (12) devienne visible à l'oeil nu sur ledit cliché,
- un moyen pour vérifier la correspondance entre l'identifiant alpha numérique (12) visible à l'oeil nu sur le cliché radiographique développé et l'identifiant alpha numérique (12) inscrit sur l'étiquette (5).

11. Système selon la revendication 10, dans lequel la plaque-support (1) est destinée à être attachée sur une tuyauterie (T), au niveau de la soudure (S), au moyen d'un collier (15), ladite plaque-support étant reliée audit collier au moyen d'un lien (16) configuré pour autoriser une rotation de ladite plaque-support autour de ladite tuyauterie.

12. Système selon l'une des revendications 10 ou 11, dans lequel :
- la plaque-support (1) est formée d'une coque (10),
- la coque rigide (10) présente un logement (11) dans lequel sont logés les éléments (120) constitutifs de l'identifiant alpha numérique (12),
- ce logement (11) est obturé par une plaque (13) opaque dans laquelle est intégrée une puce RFID (14).

## Patentansprüche

1. Verfahren zum Überprüfen einer Schweißung (S) durch Röntgenographie, wobei das Verfahren die folgenden Schritte aufweist:
- Zuordnen einer eindeutigen Kennung (20) zu der Schweißung (S), die überprüft werden muss,
- Eintragen auf einem Etikett (5) einer alphanumerischen Kennung (12) und der eindeutigen Kennung (20) der Schweißung (S), wobei mindestens die alphanumerische Kennung (12) mit bloßem Auge erkennbar eingetragen wird,
- Integrieren in eine Trägerplatte (1) der gleichen alphanumerischen Kennung (12) wie jene, die auf dem Etikett (5) eingetragen ist, wobei die Kennung mit bloßem Auge nicht erkennbar ist und aus Elementen (120) zusammengesetzt ist, die für Röntgen- und Gammastrahlen opak sind,
- Installieren der Trägerplatte (1) an der Schweißung (S) und Aufnehmen eines Röntgenbildes (3) der Anordnung Schweißung/Trägerplatte,
- Befestigen des Etiketts (5) auf dem aufgenommenen Röntgenbild (3),
- Entwickeln des aufgenommenen Röntgenbildes (3) derart, dass die alphanumerische Kennung (12) auf der Aufnahme mit bloßem Auge erkennbar wird,
- Überprüfen der Entsprechung zwischen der alphanumerischen Kennung (12), die auf dem entwickelten Röntgenbild (3) mit bloßem Auge erkennbar ist, und der alphanumerischen Kennung (12), die auf dem Etikett (5) eingetragen ist.

2. Verfahren nach Anspruch 1, das die folgenden Schritte aufweist:
- Integrieren in die Trägerplatte (1): eines ersten RFID-Chips (14) und der alphanumerischen Kennung (12), die für Röntgen- und Gammastrahlen opak ist,
- Inkrementieren des Speichers dieses ersten RFID-Chips (14) mit:
∘ der alphanumerischen Kennung (12),
∘ der eindeutigen Kennung (20) der Schweißung.

3. Verfahren nach Anspruch 2, umfassend die Schritte, die darin bestehen, den ersten RFID-Chip (14) zu lesen und ein erstes Etikett (2) zu editieren, auf dem mindestens eingetragen werden: die alphanumerische Kennung (12) und die eindeutige Kennung (20) der Schweißung (S), wobei die Eintragung durchgeführt wird, indem diese Kennungen verschlüsselt in einen Barcode oder in den Speicher eines zweiten RFID-Chips (21) integriert werden, mit dem das erste Etikett versehen wird.

4. Verfahren nach Anspruch 3, das die Schritte aufweist, die darin bestehen:
- die Trägerplatte (1) an der Schweißung (S) zu installieren und ein Röntgenbild (3) der Anordnung Schweißung/Trägerplatte aufzunehmen,
- das erste Etikett (2) auf einen Umschlag (4) zu kleben, in den das Röntgenbild (3) eingefügt wird.

5. Verfahren nach Anspruch 4, das die Schritte aufweist, die darin bestehen:
- den Barcode oder den zweiten RFID-Chip (21) zu lesen, der auf dem ersten Etikett (2) angeordnet wird, das auf den Umschlag (4) geklebt wird, und den Speicher eines dritten RFID-Chips (51) mit Folgendem zu inkrementieren:
∘ der alphanumerischen Kennung (12),
∘ der eindeutigen Kennung (20) der Schweißung (S),
- ein zweites Etikett (5) zu editieren, in das der dritte RFID-Chip (51) integriert wird, und auf dieses zweite Etikett mindestens die alphanumerische Kennung (12) und die eindeutige Kennung (20) der Schweißung (S) mit bloßem Auge erkennbar einzutragen,
- das Röntgenbild (3) aus dem Umschlag (4) herauszunehmen und das zweite Etikett (5) auf das Bild zu kleben,
- das Röntgenbild (3) derart zu entwickeln, dass die alphanumerische Kennung (12) auf dem Bild mit bloßem Auge erkennbar ist,
- die Entsprechung zwischen der alphanumerischen Kennung (12), die auf dem entwickelten Röntgenbild (3) mit bloßem Auge erkennbar ist, und der alphanumerischen Kennung (12), die auf dem zweiten Etikett (5) eingetragen ist, zu überprüfen.

6. Verfahren nach Anspruch 5, wobei bei Entsprechung zwischen der alphanumerischen Kennung (12), die auf dem entwickelten Röntgenbild (3) mit bloßem Auge erkennbar ist, und der alphanumerischen Kennung (12), die auf dem zweiten Etikett (5) eingetragen ist:
- der dritte RFID-Chip (51) gelesen wird,
- ein vorausgefüllter Bericht (7) erzeugt wird, in den die Informationen eingetragen werden, die in dem Speicher des dritten RFID-Chips (51) enthalten sind.

7. Verfahren nach einem der vorhergehenden Ansprüche, wobei die Trägerplatte (1) an der Schweißung (S) installiert wird, indem sie mittels einer Schelle (16), die mit einem gesicherten Riegel (16) versehen ist, der das Loslösen der Schelle verhindert, an der Rohrleitung (T) befestigt wird.

8. Verfahren nach Anspruch 7 in Kombination mit Anspruch 3, umfassend einen Schritt, der darin besteht, das erste Etikett (2) in einem Beutel (22) zu installieren und diesen Beutel (22) an die Schelle (15) zu hängen, an der die Trägerplatte (1) befestigt wird.

9. Verfahren nach einem der Ansprüche 2 bis 8, umfassend einen Schritt, der darin besteht, die Schweißung (S), die überprüft werden muss, zu geolokalisieren, wobei der Schritt des Geolokalisierens durchgeführt wird, indem:
- eine Geolokalisierungsinformation, die der Schweißung (S) zugeordnet wird, in die Trägerplatte (1) integriert wird
- und/oder indem der Schweißung (S) zum Zeitpunkt ihrer Ausführung eine Geolokalisierungsinformation zugeordnet wird
- und/oder indem der erste RFID-Chip (14) mittels eines RFID-Chip-Lesegeräts, das ein GSM-Modul aufweist, das geeignet ist, GPS-Koordinaten zu erfassen, gelesen wird und indem die GPS-Koordinaten, die zum Zeitpunkt des Lesens des ersten Chips erfasst werden, in einem Speicher von diesem Lesegerät aufgezeichnet werden.

10. System zum Überprüfen einer Schweißung (S) durch Röntgenographie, wobei das System Folgendes aufweist:
- ein Etikett (5), auf dem eine eindeutige Kennung (20), die der Schweißung (S), die zu überprüfen ist, zugeordnet ist, und eine alphanumerische Kennung (12) eingetragen ist, wobei mindestens die alphanumerische Kennung (12) mit bloßem Auge erkennbar eingetragen ist,
- eine Trägerplatte (1), die die gleiche alphanumerische Kennung (12) wie jene, die auf dem Etikett eingetragen ist, aufweist, wobei die Kennung mit bloßem Auge nicht erkennbar ist und aus Elementen (120) zusammengesetzt ist, die für Röntgen- und Gammastrahlen opak sind,
- ein Röntgengerät, um ein Röntgenbild (3) der Anordnung Schweißung/Trägerplatte aufzunehmen,
- ein Mittel zum Befestigen des Etiketts (5) auf dem aufgenommenen Röntgenbild (3),
- ein Mittel zum Entwickeln des aufgenommenen Röntgenbildes (3), derart, dass die alphanumerische Kennung (12) auf dem Bild mit bloßem Auge erkennbar wird,
- ein Mittel zum Überprüfen der Entsprechung zwischen der alphanumerischen Kennung (12), die auf dem entwickelten Röntgenbild mit bloßem Auge erkennbar ist, und der alphanumerischen Kennung (12), die auf dem Etikett (5) eingetragen ist.

11. System nach Anspruch 10, wobei die Trägerplatte (1) dazu bestimmt ist, auf einer Rohrleitung (T) an der Schweißung (S) mittels einer Schelle (15) befestigt zu werden, wobei die Trägerplatte (1) mit der Schelle mittels einer Verbindung (16) verbunden ist, die konfiguriert ist, um eine Drehung der Trägerplatte um die Rohrleitung zu ermöglichen.

12. System nach einem der Ansprüche 10 oder 11, wobei:
- die Trägerplatte (1) aus einer Schale (10) gebildet ist,
- die starre Schale (10) eine Aufnahme (11) aufweist, in der die Bestandteile (120) der alphanumerischen Kennung (12) untergebracht sind,
- diese Aufnahme (11) durch eine opake Platte (13) verschlossen ist, in der ein RFID-Chip (14) integriert ist.

## Claims

1. Method for checking a weld (S) using X-rays, which method comprises the following steps:
- associating a unique identifier (20) with the weld (S) to be checked,
- entering an alphanumeric identifier (12) and the unique identifier (20) of the weld (S) on a tag (5), at least the alphanumeric identifier (12) being entered so as to be visible to the naked eye,
- incorporating the same alphanumeric identifier (12) as the one entered on the tag (5) into a carrier plate (1), which identifier is invisible to the naked eye and formed of elements (120) that are opaque to X-rays and gamma rays,
- installing the carrier plate (1) at the weld (S) and capturing an X-ray image (3) of the weld/carrier plate assembly,
- fastening the tag (5) to the captured X-ray image (3),
- developing the captured X-ray image (3) so that the alphanumeric identifier (12) becomes visible to the naked eye on said image,
- verifying that the alphanumeric identifier (12) visible to the naked eye on the developed X-ray image (3) matches the alphanumeric identifier (12) entered on the tag (5).

2. Method according to Claim 1, comprising the following steps:
- incorporating, into the carrier plate (1): a first RFID chip (14) and the alphanumeric identifier (12) that is opaque to X-rays and gamma rays,
- incrementing the memory of this first RFID chip (14) with:
∘ the alphanumeric identifier (12),
∘ the unique identifier (20) of the weld.

3. Method according to Claim 2, comprising steps consisting in reading the first RFID chip (14) and issuing a first tag (2) on which are entered at least: the alphanumeric identifier (12) and the unique identifier (20) of the weld (S), which entry is performed by incorporating, in an encrypted manner, these identifiers into a barcode or into the memory of a second RFID chip (21) with which said first tag is provided.

4. Method according to Claim 3, comprising steps consisting in:
- installing the carrier plate (1) at the weld (S) and capturing an X-ray image (3) of the weld/carrier plate assembly,
- bonding the first tag (2) to an envelope (4) into which the X-ray image (3) is inserted.

5. Method according to Claim 4, comprising steps consisting in:
- reading the barcode or the second RFID chip (21) positioned on the first tag (2) bonded to the envelope (4), and incrementing the memory of a third RFID chip (51) with:
∘ the alphanumeric identifier (12),
∘ the unique identifier (20) of the weld (S),
- issuing a second tag (5) into which the third RFID chip (51) is incorporated, and entering at least the alphanumeric identifier (12) and the unique identifier (20) of the weld (S) on this second tag so as to be visible to the naked eye,
- taking the X-ray image (3) out of the envelope (4) and bonding the second tag (5) to said image,
- developing the X-ray image (3) so that the alphanumeric identifier (12) is visible to the naked eye on said image,
- verifying that the alphanumeric identifier (12) visible to the naked eye on the developed X-ray image (3) matches the alphanumeric identifier (12) entered on the second tag (5).

6. Method according to Claim 5, wherein, if the alphanumeric identifier (12) visible to the naked eye on the developed X-ray image (3) matches the alphanumeric identifier (12) entered on the second tag (5) :
∘ the third RFID chip (51) is read,
∘ and a pre-populated report (7) is generated documenting the information contained in the memory of the third RFID chip (51).

7. Method according to one of the preceding claims, wherein the carrier plate (1) is installed at the weld (S) by attaching it to the piping (T) by way of a collar (16) provided with a secure lock (16) preventing said collar from being detached.

8. Method according to Claim 7 taken in combination with Claim 3, comprising a step consisting in installing the first tag (2) in a pouch (22) and in hanging this pouch (22) on the collar (15) to which the carrier plate (1) is attached.

9. Method according to one of Claims 2 to 8, comprising a step consisting in geolocating the weld (S) to be checked, which geolocating step is performed by:
- incorporating an item of geolocation information associated with the weld (S) into the carrier plate (1),
- and/or by associating an item of geolocation information with the weld (S) when the latter is created,
- and/or by reading the first RFID chip (14) by way of an RFID chip reader incorporating a GPS module capable of noting GPS coordinates, and by recording the GPS coordinates noted when said first chip is read in a memory of this reader.

10. System for checking a weld (S) using X-rays, which system comprises:
- a tag (5) on which is entered a unique identifier (20) associated with the weld (S) to be checked and an alphanumeric identifier (12), at least the alphanumeric identifier (12) being entered so as to be visible to the naked eye,
- a carrier plate (1) incorporating the same alphanumeric identifier (12) as the one entered on the tag, which identifier is invisible to the naked eye and formed of elements (120) that are opaque to X-rays and gamma rays,
- an X-ray device for capturing an X-ray image (3) of the weld/carrier plate assembly,
- a means for fastening the tag (5) to the captured X-ray image (3),
- a means for developing the captured X-ray image (3) so that the alphanumeric identifier (12) becomes visible to the naked eye on said image,
- a means for verifying that the alphanumeric identifier (12) visible to the naked eye on the developed X-ray image matches the alphanumeric identifier (12) entered on the tag (5).

11. System according to Claim 10, wherein the carrier plate (1) is intended to be attached to piping (T) at the weld (S) by way of a collar (15), said carrier plate being linked to said collar by way of a link (16) configured to allow rotation of said carrier plate about said piping.

12. System according to either of Claims 10 and 11, wherein:
- the carrier plate (1) is formed of a shell (10),
- the rigid shell (10) has a recess (11) in which the elements (120) forming the alphanumeric identifier (12) are housed,
- this recess (11) is closed off by an opaque plate (13) into which an RFID chip (14) is incorporated.
